# FASCICULE DE BREVET EUROPEEN

(11) **EP 2 829 465 B1**
(45) Date de publication et mention de la délivrance du brevet: **25.05.2016**
(21) Numéro de dépôt: 14177947.0
(22) Date de dépôt: 22.07.2014
(51) Int. Cl.: B62K 21/12

(54) **Cintre de direction et procédé de fabrication correspondant**
Fahrradlenker und entsprechendes Herstellungsverfahren
Handlebar and corresponding manufacturing method

(30) Priorité: 25.07.2013 FR 1357365; 03.10.2013 FR 1359598
(43) Date de publication de la demande: 28.01.2015
(73) Titulaire: Caliplast, 44140 La Planche (FR); Red Motion, 53001 Laval (FR)
(72) Inventeur: Seynaeve, Nicolas, 67400 ILLKIRCH-GRAFFENSTADEN (FR); Mermoud, François, 53000 LAVAL (FR); Metenier, Pascal, 44120 VERTOU (FR); Etourneau, Yoann, 44300 NANTES (FR)
(74) Mandataire: Vidon Brevets & Stratégie

(56) Documents cités:
- EP-A1- 2 325 075
- CN-Y- 201 026 980
- DE-U1-202005 017 905
- US-A1- 2003 094 067
- US-A1- 2009 056 495

## Description

### 1. Domaine de l'invention

Le domaine de l'invention est celui de la conception et de la fabrication de véhicules légers.

Plus précisément, l'invention concerne un cintre de direction, notamment pour bicyclettes, conçu pour permettre l'amortissement de chocs et/ou de vibrations provoqués par le passage du véhicule sur un terrain présentant des obstacles franchissables et/ou des aspérités de surface.

L'invention s'applique à tout type de véhicules pourvus de cintre de direction, tels que les bicyclettes, les motocycles, les quads, voire les scooters de mer.

### 2. Arrière-plan technologique

Dans le domaine de l'invention, en particulier en ce qui concerne les bicyclettes et les vélos tout terrain, une solution classique pour absorber les chocs et/ou les vibrations perçus par l'utilisateur du fait des irrégularités du terrain, consiste à monter à l'avant du vélo un dispositif de fourche télescopique.

Ces fourches comprennent soit un élément élastique (par exemple un ressort métallique, un élastomère ou encore un ressort à air comprimé), soit un élément amortisseur tel qu'un vérin hydraulique.

Ces systèmes de suspension fonctionnent essentiellement selon une direction verticale, et doivent supporter une bonne partie du poids de l'utilisateur du vélo.

De ce fait, il est délicat de choisir la raideur optimale pour les éléments élastiques de ce type de suspension. En effet, en utilisant des ressorts et des amortisseurs trop souples, on voit très rapidement apparaître un phénomène de pompage (absorption partielle et non désirée de l'énergie de pédalage), lorsque le cycliste est en plein effort et développe des niveaux de puissance importants. Ce phénomène devient alors très vite pénalisant au niveau de l'efficacité d'interaction entre le cycliste, sa bicyclette et son environnement (le terrain), ce qui tend à pénaliser le cycliste, notamment en termes de fatigue.

Pour tenter de supprimer ce phénomène de pompage, une solution a consisté à augmenter la raideur des suspensions, mais ceci à un point où elles n'absorbent plus que partiellement les chocs provoqués par les irrégularités du terrain.

Cependant, de telles suspensions raffermies restent intéressantes pour amortir les chocs de grandes amplitudes et à basses fréquences, tels que ceux rencontrés lors de la pratique du vélo tout terrain. Il n'en demeure pas moins que les vibrations à forte fréquence provoquées par les irrégularités du bitume ou rencontrées lors de la progression sur chemin caillouteux, ne sont quasiment pas filtrées et donc transmises directement vers les membres supérieurs du cycliste via la potence et le cintre de la bicyclette.

Il en résulte que le cycliste subit des efforts induits par de telles vibrations, au risque de voir apparaître des troubles musculo-squelettiques, une diminution des réflexes vestibulo-oculaires ou encore une fatigue musculaire excessive.

Une solution pour limiter les effets de ce phénomène consiste à interposer entre la source de vibrations et le cycliste un ou plusieurs éléments élastiques susceptibles de se déformer en vue d'encaisser les efforts perturbateurs laissant le véhicule libre de suivre les inégalités du sol sans transmettre de vibrations au pilote.

Parallèlement, la réalisation traditionnelle des cintres de direction est basée sur l'utilisation de tubes, en matériaux composites ou métalliques, donc axisymétriques. Toutes ces réalisations basées sur des éléments axisymétriques ne peuvent être optimisées dans les deux plans de fonctionnement, c'est-à-dire dans le plan horizontal et dans le plan vertical.

Dans le domaine de l'invention, il a déjà été proposé des cintres de direction, notamment pour bicyclettes, conçus pour filtrer les vibrations provoquées par l'état du sol.

Un tel cintre est notamment décrit par le document de brevet publié sous le numéro FR-2 690 128. Selon la solution décrite par ce document, le cintre est formé d'une lame en matériau composite à fibres longitudinales non coupées, noyées dans un liant, le cintre présentant de chaque côté d'une partie centrale, une partie souple et amincie et une partie terminale. Chaque partie centrale de la lame comprend des régions souples, amincies verticalement tandis qu'elles présentent une largeur, dans le plan horizontal, sensiblement constantes, de façon à favoriser le fléchissement dans le sens vertical.

En dépit de la théorie de conception de ce cintre, on déplore dans la pratique que sa flexibilité est aussi importante vers le haut que vers le bas, altérant de ce fait la maniabilité du véhicule équipé d'un tel cintre, ainsi que la précision de pilotage.

De plus, le rendement de l'utilisateur lors des phases de traction sur le cintre (relance « en danseuse » sur une bicyclette par exemple) est diminué.

En outre, l'énergie des chocs n'est pas absorbée par un élément amortissant. Au contraire, on déplore un effet ressort. Document US 2003/0094067 A1 montre le préambule de la revendication 1.

### 3. Objectifs de l'invention

L'invention, dans au moins un mode de réalisation, a notamment pour objectif de pallier ces inconvénients de l'art antérieur.

Plus précisément, dans au moins un mode de réalisation, l'invention a pour objectif de proposer un cintre de direction pour véhicule léger, en particulier pour bicyclette, qui soit conçu pour absorber des chocs et/ou des vibrations, et qui permette une meilleure transmission du couple de direction comparé aux solutions de l'art antérieur.

L'invention a également pour objectif, dans au moins un mode de réalisation, de fournir un tel cintre dont la capacité d'amortissement des chocs et/ou des vibrations peut être adaptée aisément.

L'invention a aussi pour objectif, dans au moins un mode de réalisation, de fournir un tel cintre qui n'engendre pas, ou quasiment, de surpoids, et dont le coût est optimisé.

### 4. Exposé de l'invention

Ces objectifs, ainsi que d'autres qui apparaîtront par la suite, sont atteints grâce à l'invention qui a pour objet un cintre de direction pour véhicule léger, notamment pour une bicyclette, comprenant une portion centrale de fixation du cintre au tube de direction de la bicyclette et deux portions terminales formant les poignées situées de part et d'autre de ladite portion centrale.

Selon l'invention, le cintre de direction est fabriqué en matière plastique, et comprend au moins un insert de rigidification du cintre.

Ainsi, l'invention propose un cintre de direction fabriqué en matière plastique suivant une géométrie et un dimensionnement spécifique ce qui procure au cintre une flexibilité selon différents plans, et notamment le plan vertical (qui comprend l'axe de rotation directionnel du cintre) lorsque le cintre est monté sur une bicyclette, par exemple. Le cintre de l'invention comprend en outre un ou plusieurs inserts de rigidification qui permettent de limiter cette flexibilité dans une direction du plan vertical.

Selon l'invention, ledit cintre comprend une partie inférieure destinée à être orientée vers le sol lorsque ledit cintre est monté sur la bicyclette et une partie supérieure destinée à être orientée vers l'utilisateur de ladite bicyclette, ledit au moins un insert de rigidification étant situé sur la partie supérieure du cintre.

Ainsi, le cintre de direction plastique qui est flexible selon le plan vertical comprend au moins un insert situé sur la partie haute du cintre, le ou les inserts étant destinés à rigidifier le cintre vers le haut (c'est-à-dire de la ou les roues avant vers l'utilisateur).

Le ou les inserts de rigidification forment ainsi un limiteur de flexion du cintre vers le haut.

De cette façon, le cintre est plus rigide vers le haut et se déforme prioritairement vers le bas (c'est-à-dire davantage vers le bas en direction de la roue avant que vers le haut en direction de l'utilisateur) ce qui permet d'amortir les chocs et/ou vibrations et d'améliorer significativement le confort de pratique du cycliste.

Ainsi, grâce à l'invention, on obtient un cintre de direction apte à amortir les chocs et/ou les vibrations de façon efficace, ceci tout en permettant de conserver une grande précision de pilotage s'agissant du couple de direction.

En effet, la géométrie spécifique du cintre lui garantit une raideur suffisante dans le plan horizontal pour ne pas perturber le pilotage du véhicule.

La mise en oeuvre d'un ou de plusieurs inserts (limiteurs de flexion) permet de contribuer à la raideur du cintre dans la direction du bas (ou du sol) vers le haut (c'est-à-dire vers l'utilisateur).

La fabrication du cintre à partir de plastique permet d'obtenir une dissipation des chocs et/ou vibrations susceptibles d'être transmises à l'utilisateur, limitant le phénomène d'effet ressort mentionné en référence à l'art antérieur.

Ainsi, dans le cas d'un cintre selon l'invention, monté sur une bicyclette, le cycliste peut, lors d'une relance « en danseuse » (debout sur les pédales), tirer sur le cintre de direction sans que cela n'occasionne une perte significative d'énergie.

D'une manière générale, dans le cas du cyclisme, la rigidité du cintre selon l'invention, dans le sens vertical (et en particulier vers le haut) permet d'optimiser l'efficience du couple cycliste/bicyclette, lorsque le cycliste exerce une traction sur le cintre afin d'ajuster la stratégie posturale de son buste.

Un cintre de direction selon l'invention, s'inscrit donc dans une approche de respect des contraintes bio-mécaniques de l'activité du cycliste, mais également d'autres sports appliquant l'utilisation d'un véhicule léger, tel que la moto, le quad ou le scooter des mers.

Un tel cintre en plastique utilise un procédé de fabrication avantageux d'un point de vue économique.

Selon une caractéristique particulière de l'invention, le cintre de direction comprend deux inserts disposés de façon symétrique par rapport à ladite portion centrale.

Selon une caractéristique particulière de l'invention, ledit cintre est fabriqué en thermoplastique ou bien en plastique thermodurcissable.

Selon une caractéristique particulière de l'invention, ledit cintre est fabriqué en composite plastique comprenant une matrice plastique et des fibres de renfort.

Ainsi, le cintre peut être fabriqué à partir d'un composite à matrice thermoplastique, c'est-à-dire en utilisant des fibres de renfort noyées dans une matrice en résine thermoplastique.

Selon une caractéristique particulière de l'invention, lesdites fibres de renfort sont choisies parmi l'un au moins des matériaux suivants:
- le verre,
- le carbone,
- le lin,
- l'aramide,
- le kevlar.

Selon une caractéristique particulière de l'invention, lesdites fibres de renfort sont des fibres courtes, dont la longueur est comprise entre 0.1 mm et 1 mm, et/ou des fibres longues, dont la longueur est comprise entre 1 mm et 50 mm.

Selon une caractéristique particulière de l'invention, ledit cintre comprend deux demi-coques solidarisées l'une à l'autre formant le noyau du cintre.

Selon une caractéristique particulière de l'invention, ledit noyau est recouvert par un surmoulage.

Selon une caractéristique particulière de l'invention, ledit au moins un insert de rigidification est rapporté sur ledit noyau.

Selon une caractéristique particulière de l'invention, ledit noyau comprend au moins un logement de réception d'un insert de rigidification.

Selon une caractéristique particulière de l'invention, ledit au moins un insert de rigidification est fixé audit noyau par vissage ou par collage.

De préférence, ces inserts ne sont pas interchangeables.

D'autres techniques d'assemblage peuvent être mises en oeuvre.

Selon une caractéristique particulière de l'invention, ledit au moins un insert est réalisé dans un matériau plastique différent ou non du reste du cintre.

Ainsi, le ou les inserts peuvent être conçus dans un matériau plastique plus rigide que le reste du cintre, ce qui permet de moduler la flexibilité du cintre dans la direction verticale en fonction des besoins, notamment en fonction de la pratique de l'utilisateur et/ou de la physiologie de l'utilisateur (et en particulier de son poids).

Selon une caractéristique particulière de l'invention, chacune desdites demi-coques est creuse à ses extrémités longitudinales et comprend des renforts entre lesdites extrémités.

L'invention concerne également un procédé de fabrication d'un cintre de direction tel que décrit précédemment.

Selon l'invention, un tel procédé comprend :
- une étape d'obtention de deux demi-coques destinées à former le noyau du cintre ;
- une étape d'obtention d'au moins un insert de rigidification ;
- une étape d'assemblage des deux demi-coques de façon à obtenir le noyau du cintre ;
- une étape de surmoulage dudit noyau du cintre de façon à obtenir un noyau surmoulé ;
- une étape de fixation dudit au moins un insert de rigidification sur le noyau surmoulé.

On obtient ainsi une structure simplifiée de cintre anti-vibration permettant une fabrication et un assemblage des différents organes aisés.

Selon une caractéristique particulière de l'invention, les étapes d'obtention dudit au moins un insert et des deux demi-coques, et l'étape de surmoulage sont réalisées par injection d'un matériau plastique.

### 5. Liste des figures

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue de dessus d'un cintre de direction selon un mode de réalisation de l'invention ;
- la figure 2 est une vue de face d'une des demi-coques du cintre de la figure 1;
- la figure 3 est une vue en perspective des deux demi-coques du cintre de la figure 1 avant assemblage ;
- la figure 4 est une vue en perspective des deux demi-coques assemblées et surmoulées formant le noyau du cintre surmoulé ;
- la figure 5 est une vue en perspective des deux demi-coques assemblées et surmoulées et des inserts du cintre de la figure 1 ;
- la figure 6 est une vue en coupe du cintre de la figure 1;
- les figures 7A, 7B et 7C sont des vues de dessous, en perspective et de face respectivement, d'un insert ;
- la figure 8 est un diagramme des étapes du procédé de fabrication du cintre de direction selon un mode de réalisation de l'invention.

### 6. Description détaillée

Comme indiqué précédemment, le principe de l'invention consiste dans le fait de proposer un cintre de direction, ou guidon, flexible apte à amortir des chocs et/ou des vibrations.

Plus précisément, le cintre est fabriqué en plastique et est flexible dans le plan vertical, du haut du guidon vers le sol, (il permet l'absorption des chocs lors de la descente d'un trottoir par exemple), un ou plusieurs inserts permettant de supprimer, ou à tout le moins limiter, la flexibilité du cintre vers le haut quand un utilisateur tire sur le guidon pour monter un trottoir ou lors de relances, par exemple.

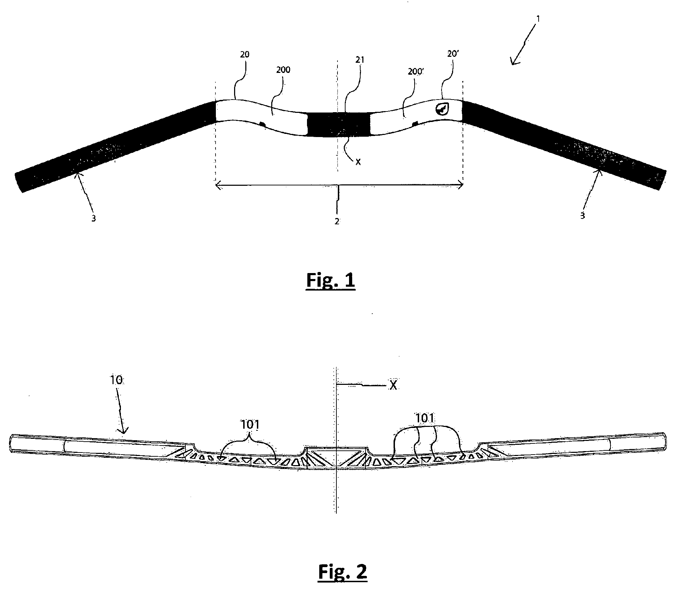

La figure 1 représente une vue de dessus du cintre de direction, ou guidon, 1 selon un mode de réalisation de l'invention.

Le cintre de direction 1 présente, dans cet exemple, une forme en W inversé et est de section transversale circulaire.

Il comprend deux interfaces de poignée, ou portions terminales, 3 situés de part et d'autre d'une portion centrale 2 et destinés à interagir avec les mains d'un utilisateur.

La portion centrale 2 comprend deux parties latérales 20, 20' espacées par une partie centrale 21 de fixation du cintre 1 au tube de direction de la bicyclette (via une potence non représentée), la partie centrale 21 étant de section transversale circulaire.

L'axe de rotation directionnel X du cintre 1 traverse cette partie centrale 21.

Chacune des parties latérales 20, 20' comprend un insert de rigidification 200, 200' respectivement (appelé "insert" par la suite) qui est logé et fixé dans un évidement de forme correspondante ménagé dans la partie latérale 20, 20' respectivement.

On note que les interfaces de poignée 3 sont tubulaires et creuses, ou partiellement creuses.

Les inserts 200, 200' sont situés sur le haut du cintre 1 une fois ce dernier installé sur la bicyclette (c'est-à-dire à l'opposé du tube de direction de la bicyclette). Ils s'étendent d'une interface de poignée 3 vers l'autre et sont rapportés sur la partie supérieure du cintre 1 de façon à moduler (dans le sens d'une rigidification) la flexion du cintre 1 du bas vers le haut, selon l'axe de rotation directionnel X.

Les inserts 200, 200' travaillent en compression lorsque l'utilisateur tire sur le cintre 1, c'est-à-dire qu'ils se retrouvent en compression entre la partie centrale 21 et l'interface de poignée 3. Les inserts 200, 200' ne pouvant pas se déformer (ou très peu), la flexion du cintre vers le haut est donc limitée.

Il est à noter que les inserts 200, 200' n'influencent pas la flexibilité du cintre 1 vers le bas.

De façon avantageuse, le cintre de direction 1 de l'invention est fabriqué en matière plastique.

Ainsi, le cintre de direction 1 de l'invention présente un coût peu élevé, un poids limité et un design soigné.

Il peut être notamment obtenu à partir de composites thermoplastiques constitués d'une résine thermoplastique chargée avec des fibres de renfort longues et/ou courtes (on parle dans certains cas de "plastique chargé").

Les fibres de renfort sont en verre et/ou en carbone et/ou en lin et/ou en kevlar, par exemple.

Les résines utilisées sont du type PPA (pour "polyphtalamides"), par exemple. D'autres types de résines et de fibres peuvent être utilisés.

Les résines thermoplastiques présentent une très faible reprise d'humidité et permettent de limiter les variations des caractéristiques mécaniques du cintre 1 en fonction de la température.

Toutes les pièces du cintre 1, y compris les inserts 200, 200', sont fabriquées dans le même plastique.

Toutefois, un plastique plus dur peut être choisi pour fabriquer les inserts 200, 200'.

Du fait que le cintre 1 soit flexible vers le bas et fabriqué en matière plastique, il permet de dissiper les chocs et/ou vibrations susceptibles d'être transmises à l'utilisateur lors des descentes de trottoir, lors de passage dans des nids de poule ou encore dans les passages pavés. Dit autrement, il permet de limiter les traumatismes du membre supérieur de l'utilisateur par l'amortissement des vibrations communiquées aux mains de l'utilisateur via le cintre 1.

Par ailleurs, la mise en oeuvre d'inserts 200, 200' sur le haut du cintre 1 permet de rigidifier le cintre 1 vers le haut (en traction) lorsque l'utilisateur tire sur le cintre 1 pour monter sur un trottoir, par exemple

En d'autres termes, du fait que le cintre de direction 1 de l'invention soit fabriqué en plastique et comprenne un ou plusieurs inserts sur le haut du cintre 1, le cintre de direction 1 de l'invention est rigide vers le haut ce qui minimise les pertes en rendement et flexible vers le bas pour absorber les chocs.

Le cintre de direction 1 de l'invention est notamment destiné aux vélos ville, aux VTC, et aux VTT, pour les déplacements au quotidien ou les ballades.

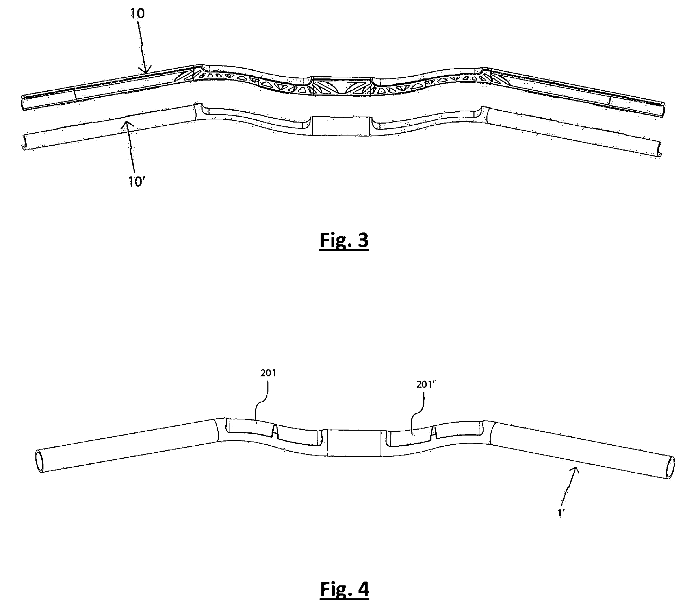

En référence à la figure 3, le cintre de direction 1 de l'invention est constitué par l'assemblage de deux demi-coques 10, 10'.

La demi-coque 10, qui est représentée de face sur la figure 2, est creuse à ses extrémités longitudinales, des renforts 101 étant prévus pour rigidifier la demi-coque 10 dans la zone présentant des contraintes plus importantes, c'est-à-dire la portion centrale 2 du cintre 1. Il en est de même pour l'autre demi-coque 10'.

La disposition et la forme des renforts 101 ne sont pas limitées à celles illustrées sur cette figure.

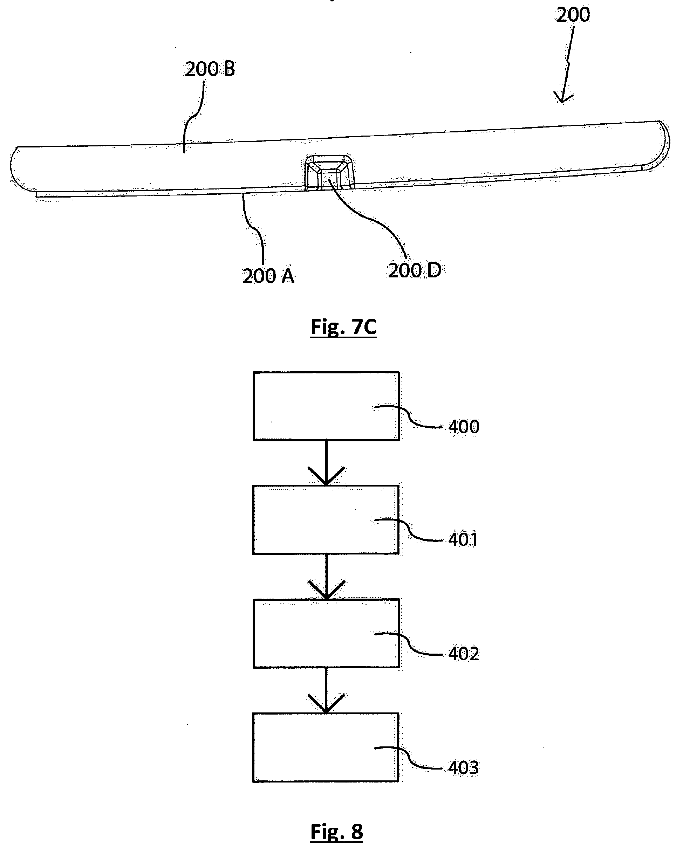

On décrit par la suite, en relation avec la figure 8, le procédé de fabrication du cintre de direction 1 selon un mode de réalisation.

Le procédé de fabrication comprend l'obtention par injection plastique dans un moule de chacune des demi-coques 10,10' et des inserts 200, 200' (étape 400).

L'injection plastique présente l'avantage d'être un procédé de fabrication avantageux économiquement.

Dans une variante, le cintre 1 peut être obtenu par moulage par injection de gaz ou d'eau.

Les demi-coques 10, 10' moulées lors de l'étape 400, et illustrées en perspective sur la figure 3, sont ensuite assemblées (étape 401) par des moyens de solidarisation du type mâle/femelle (non représentés) par exemple, de façon à former le noyau 1' du cintre 1. Ce dernier est ensuite disposé dans un moule.

Une étape 402 de surmoulage du noyau 1' du cintre 1 lors de l'étape 401 est ensuite mise en oeuvre.

Ce surmoulage consiste à recouvrir par une matière plastique injectée les demi-coques 10, 10' assemblées formant le noyau 1' du cintre 1.

Il est à noter que la matière plastique surmoulée peut être identique ou non à la matière plastique utilisée pour former les demi-coques.

On obtient ainsi le noyau 1' surmoulé de la figure 4.

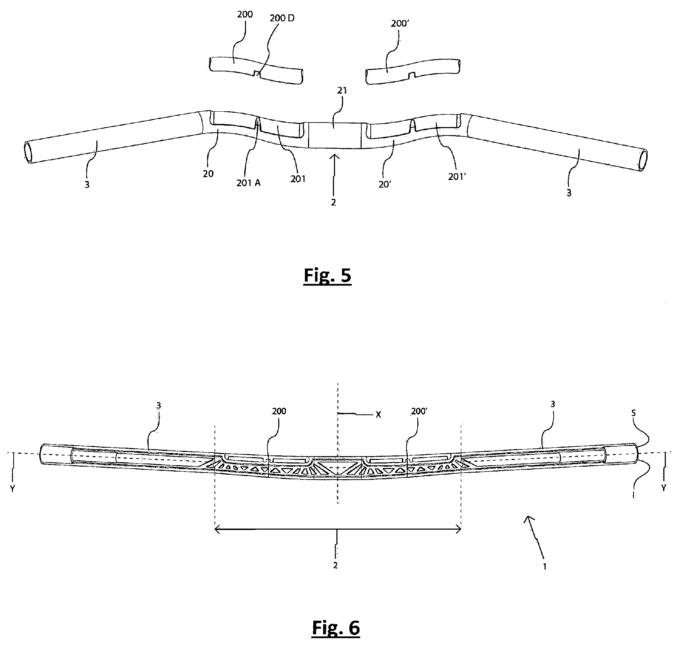

Lors de l'étape 403 suivante, les inserts 200, 200' moulés lors de l'étape 400 sont fixés par collage, par exemple, dans les évidements 201, 201' respectivement du noyau 1' surmoulé, comme illustré sur la figure 5.

La figure 6 est une vue en coupe du cintre 1 obtenu par le procédé de fabrication de l'invention qui montre les inserts 200, 200' disposés dans les évidements 201, 201'. Comme souligné précédemment, ces inserts sont placés sur la partie supérieure S du cintre 1, c'est-à-dire la partie destinée à être orientée vers l'utilisateur, la partie inférieure I du cintre 1 étant destinée à être orientée vers le sol et la roue avant. Ces parties supérieure S et inférieure I sont délimitées par le plan transversal Y.

Il est important de noter que la géométrie du cintre, notamment l'emplacement et la forme géométrique (longueur, hauteur) des évidements 201, 201', ainsi que la disposition des renforts 101, garantit une raideur suffisante du cintre 1 dans le plan horizontal pour ne pas perturber le pilotage du véhicule et procure une flexibilité dans le plan vertical. Les inserts de rigidification permettent de limiter la flexibilité du cintre dans le plan vertical, du bas vers le haut uniquement.

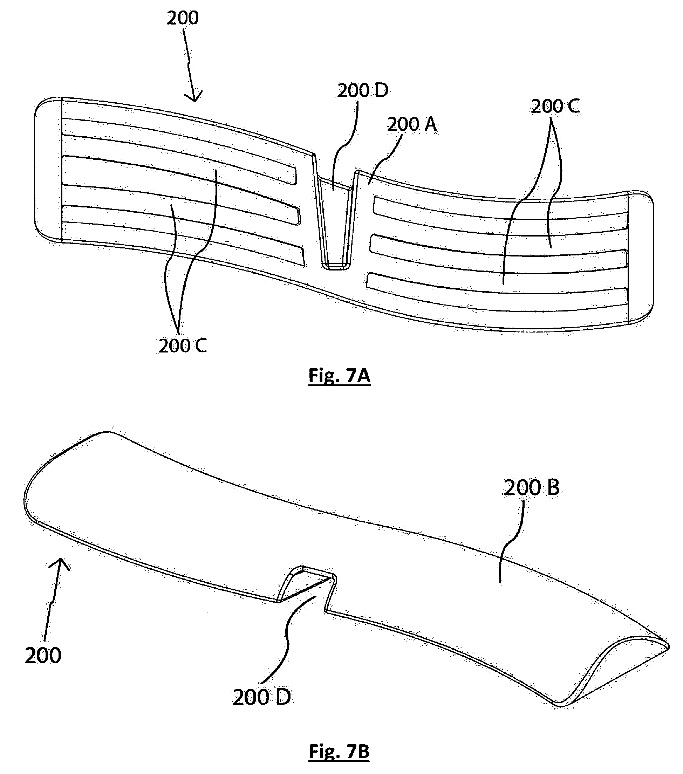

Les figures 7A, 7B et 7C sont des vues de dessous, en perspective et de face respectivement d'un insert, en l'occurrence d'un insert 200.

L'insert 200 présente une section semi-circulaire et comprend une surface plane 200A et une surface bombée 200B.

Comme mentionné précédemment, chaque insert 200, 200' est glissé/inséré et fixé dans un évidement 201, 201' correspondant de la partie centrale 2.

Comme illustré sur la figure 7A, des rainures 200C sont ménagées longitudinalement à l'intérieur de l'insert 200. Ces rainures 200C suivent la forme de l'insert 200 et permettent d'optimiser la rigidité de ce dernier. L'insert 200 comprend par ailleurs une encoche 200D transversale qui est destinée à coopérer avec une butée 201A (figure 5) formée dans l'évidement 201 et qui permet ainsi de clipser l'insert 200 dans l'évidement 201.

Le cintre 1 en plastique de l'invention est léger et robuste, et permet en outre de réduire la fatigue musculaire des avant-bras et de limiter les traumatismes, le cintre 1 offrant ainsi plus d'amorti et de confort.

### Autres aspects et variantes

L'interface de poignée peut être une partie intégrante d'une poignée.

Selon une variante envisageable, l'interface de poignée est une pièce séparée de la poignée elle-même, et constitue une pièce d'accouplement avec une poignée.

Bien entendu, un cintre de direction selon l'invention peut présenter des formes et/ou des angles différents de ceux décrits précédemment, notamment pour conférer au cintre une forme courbée vers l'avant, vers l'arrière, vers le haut ou vers le bas en vue de surélever, surbaisser, avancer ou reculer les poignées par rapport à la partie centrale. Le diamètre et la longueur du cintre de direction peuvent également varier autant que de besoin.

Un cintre de direction selon l'invention peut être utilisé seul ou en association et complément avec tout autre dispositif d'amortissement du véhicule.

Par ailleurs, l'insert de rigidification peut prendre plusieurs formes.

## Revendications

1. Cintre de direction (1), notamment pour une bicyclette, comprenant une portion centrale (2) de fixation du cintre (1) au tube de direction de la bicyclette et deux portions terminales (3) formant les poignées situées de part et d'autre de ladite portion centrale (2), ledit cintre (1) étant fabriqué en matière plastique et comprenant :
- une partie inférieure destinée à être orientée vers le sol lorsque ledit cintre (1) est monté sur la bicyclette, et
- une partie supérieure destinée à être orientée vers l'utilisateur de ladite bicyclette,
**caractérisé en ce qu'**il comprend au moins un insert de rigidification (200, 200') du cintre (1), ledit au moins un insert de rigidification (200, 200') étant situé sur la partie supérieure du cintre (1).

2. Cintre de direction (1) selon la revendication 1, **caractérisé en ce que** ledit cintre (1) est fabriqué en thermoplastique ou en plastique thermodurcissable.

3. Cintre de direction (1) selon la revendication 1, **caractérisé en ce que** ledit cintre (1) est fabriqué en composite plastique comprenant une matrice plastique et des fibres de renfort.

4. Cintre de direction (1) selon la revendication 3, **caractérisé en ce que** lesdites fibres de renfort sont choisies parmi l'un au moins des matériaux suivants:
- le verre,
- le carbone,
- l'aramide,
- le lin,
- le kevlar.

5. Cintre de direction (1) selon la revendication 3 ou 4, **caractérisé en ce que** lesdites fibres de renfort sont des fibres courtes, dont la longueur est comprise entre 0.1 mm et 1 mm, et/ou des fibres longues, dont la longueur est comprise entre 1 mm et 50 mm.

6. Cintre de direction (1) selon l'une des revendications 1 à 5, **caractérisé en ce qu'**il comprend deux demi-coques (10, 10') solidarisées l'une à l'autre formant le noyau (1') dudit cintre (1).

7. Cintre de direction (1) selon la revendication 6, **caractérisé en ce que** ledit au moins un insert de rigidification (200, 200') est fixé audit noyau (1') par vissage ou par collage.

8. Cintre de direction (1) selon l'une quelconque des revendications 1 à 7, **caractérisé en ce que** ledit au moins un insert de rigidification (200, 200') est réalisé dans un matériau plastique différent du reste du cintre (1).

9. Cintre de direction (1) selon l'une quelconque des revendications 1 à 7, **caractérisé en ce que** ledit au moins un insert de rigidification (200, 200') est réalisé dans un matériau plastique identique au reste du cintre (1).

10. Cintre de direction (1) selon l'une des revendications 6 à 9, caractérisé en ce ledit noyau (1') comprend au moins un logement de réception (201, 201') d'un insert de rigidification (200, 200').

11. Cintre de direction (1) selon l'une quelconque des revendications 6 à 10, **caractérisé en ce que** ledit noyau (1') est recouvert par un surmoulage.

12. Cintre de direction (1) selon l'une quelconque des revendications 6 à 11, **caractérisé en ce que** chacune desdites demi-coques (10, 10') est creuse à ses extrémités longitudinales et comprend des renforts (101) entre lesdites extrémités.

13. Procédé de fabrication d'un cintre de direction (1) selon l'une quelconque des revendications 1 à 12, **caractérisé en ce qu'**il comprend :
- une étape (400) d'obtention de deux demi-coques (10, 10') destinées à former le noyau (1') du cintre (1);
- une étape d'obtention (400) d'au moins un insert de rigidification (200, 200');
- une étape d'assemblage (401) des deux demi-coques (10, 10') de façon à former le noyau (1') du cintre (1);
- une étape de surmoulage (402) du noyau (1') du cintre (1) de façon à obtenir un noyau (1') surmoulé;
- une étape de fixation (403) dudit au moins un insert de rigidification (200, 200') sur la partie supérieure dudit noyau (1') surmoulé.

14. Procédé de fabrication selon la revendication 13, **caractérisé en ce que** les étapes d'obtention (400) dudit au moins un insert de rigidification (200, 200') et des deux demi-coques (10, 10'), et l'étape de surmoulage (402) sont réalisées par injection d'un matériau plastique.

## Patentansprüche

1. Lenker (1), insbesondere für ein Fahrrad, der einen zentralen Abschnitt (2) zum Befestigen des Lenkers (1) an dem Steuerkopfrohr des Fahrrads sowie zwei Endabschnitte (3), die die Griffe bilden, die sich jeweils auf einer Seite des zentralen Abschnitts (2) befinden, umfasst, wobei der Lenker (1) aus Plastik hergestellt ist und Folgendes umfasst:
- einen unteren Teil, der dazu bestimmt ist, zum Boden ausgerichtet zu sein, wenn der Lenker (1) auf das Fahrrad montiert ist, und
- einen oberen Teil, der dazu bestimmt ist, zu dem Benutzer des Fahrrads gerichtet zu sein,
**dadurch gekennzeichnet, dass** er mindestens einen Versteifungseinsatz (200, 200') des Lenkers (1) umfasst, wobei sich der mindestens eine Versteifungseinsatz (200, 200') auf dem oberen Teil des Lenkers (1) befindet.

2. Lenker (1) nach Anspruch 1, **dadurch gekennzeichnet, dass** der Lenker (1) aus Thermoplast oder aus wärmehärtbarem Plastik hergestellt ist.

3. Lenker (1) nach Anspruch 1, **dadurch gekennzeichnet, dass** der Lenker (1) aus einem Plastikverbundwerkstoff hergestellt ist, der eine Plastikmatrix und Verstärkungsfasern umfasst.

4. Lenker (1) nach Anspruch 3, **dadurch gekennzeichnet, dass** die Verstärkungsfasern aus mindestens einem der folgenden Werkstoffe ausgewählt sind:
- Glas,
- Carbon,
- Aramid,
- Leinen,
- Kevlar.

5. Lenker (1) nach Anspruch 3 oder 4, **dadurch gekennzeichnet, dass** die Verstärkungsfasern kurze Fasern sind, deren Länge zwischen 0,1 mm und 1 mm liegt, und/oder lange Fasern, deren Länge zwischen 1 mm und 50 mm liegt.

6. Lenker (1) nach einem der Ansprüche 1 bis 5, **dadurch gekennzeichnet, dass** er zwei Halbschalen (10, 10') umfasst, die miteinander fest verbunden sind, indem sie einen Kern (1') des Lenkers (1) bilden.

7. Lenker (1) nach Anspruch 6, **dadurch gekennzeichnet, dass** der mindestens eine Versteifungseinsatz (200, 200') an dem Kern (1') durch Schrauben oder Kleben befestigt ist.

8. Lenker (1) nach einem der Ansprüche 1 bis 7, **dadurch gekennzeichnet, dass** der mindestens eine Versteifungseinsatz (200, 200') aus einem Plastikwerkstoff, der von dem Rest des Lenkers (1) unterschiedlich ist, hergestellt ist.

9. Lenker (1) nach einem der Ansprüche 1 bis 7, **dadurch gekennzeichnet, dass** der mindestens eine Versteifungseinsatz (200, 200') aus einem Plastikwerkstoff hergestellt ist, der mit dem Rest des Lenkers (1) identisch ist.

10. Lenker (1) nach einem der Ansprüche 6 bis 9, **dadurch gekennzeichnet, dass** der Kern (1') mindestens eine Aufnahme (201, 201') zum Aufnehmen eines Versteifungseinsatzes (200, 200') umfasst.

11. Lenker (1) nach einem der Ansprüche 6 bis 10, **dadurch gekennzeichnet, dass** der Kern (1') durch ein Aufformen abgedeckt ist.

12. Lenker (1) nach einem der Ansprüche 6 bis 11, **dadurch gekennzeichnet, dass** jede der Halbschalen (10, 10') an ihren Längsenden hohl ist und Verstärkungen (101) zwischen den Enden umfasst.

13. Verfahren zum Herstellen eines Lenkers (1) nach einem der Ansprüche 1 bis 12, **dadurch gekennzeichnet, dass** es Folgendes umfasst:
- einen Schritt (400) zum Erhalten von zwei Halbschalen (10, 10'), die dazu bestimmt sind, den Kern (1') des Lenkers (1) zu bilden,
- einen Schritt (400) zum Erhalten mindestens eines Versteifungseinsatzes (200, 200'),
- einen Schritt (401) des Zusammenfügens der zwei Halbschalen (10, 10') derart, dass der Kern (1') des Lenkers (1) gebildet wird,
- einen Schritt (402) des Aufformens des Kerns (1') des Lenkers (1) derart, dass ein aufgeformter Kern (1') erhalten wird,
- einen Schritt (403) des Befestigens des mindestens einen Versteifungseinsatzes (200, 200') auf dem oberen Teil des aufgeformten Kerns (1').

14. Herstellungsverfahren nach Anspruch 13, **dadurch gekennzeichnet, dass** die Schritte (400) zum Erhalten mindestens eines Versteifungseinsatzes (200, 200') und der zwei Halbschalen (10, 10') sowie der Schritt (402) des Aufformens durch Spritzguss eines Plastikwerkstoffs ausgeführt werden.

## Claims

1. Steering handlebar (1), especially for a bicycle, comprising a central portion (2) for fixing the handlebar (1) to the steering tube of the bicycle and two end portions (3) forming the handles which are situated on either side of the said central portion (2), the said handlebar (1) being manufactured from plastic material and comprising:
- a lower part which is intended to be oriented towards the ground when the said handlebar (1) is mounted on the bicycle; and
- an upper part which is intended to be oriented towards the user of the said bicycle;
**characterised in that** said handlebar comprises at least one insert (200, 200') for stiffening the handlebar (1), the said at least one stiffening insert (200, 200') being situated on the upper part of the handlebar (1).

2. Steering handlebar (1) according to Claim 1, **characterised in that** the said handlebar (1) is manufactured from thermoplastic or from thermosetting plastic.

3. Steering handlebar (1) according to Claim 1, **characterised in that** the said handlebar (1) is manufactured from plastic composite comprising a plastic matrix and reinforcing fibres.

4. Steering handlebar (1) according to Claim 3, **characterised in that** the said reinforcing fibres are chosen from at least one of the following materials:
- glass;
- carbon;
- aramid;
- flax;
- Kevlar.

5. Steering handlebar (1) according to Claim 3 or 4, **characterised in that** the said reinforcing fibres are short fibres, the length of which is between 0.1 mm and 1 mm, and/or long fibres, the length of which is between 1 mm and 50 mm.

6. Steering handlebar (1) according to one of Claims 1 to 5, **characterised in that** it comprises two half-shells (10, 10') which are fastened to one another and form the core (1') of the said handlebar (1).

7. Steering handlebar (1) according to Claim 6, **characterised in that** the said at least one stiffening insert (200, 200') is fixed to the said core (1') by screwing or by adhesive bonding.

8. Steering handlebar (1) according to any one of Claims 1 to 7, **characterised in that** the said at least one stiffening insert (200, 200') is produced from a plastic material which is different from the rest of the handlebar (1).

9. Steering handlebar (1) according to any one of Claims 1 to 7, **characterised in that** the said at least one stiffening insert (200, 200') is produced from a plastic material which is identical to the rest of the handlebar (1).

10. Steering handlebar (1) according to one of Claims 6 to 9, **characterised in that** the said core (1') comprises at least one recess (201, 201') for receiving a stiffening insert (200, 200').

11. Steering handlebar (1) according to any one of Claims 6 to 10, **characterised in that** the said core (1') is covered by an over-mould.

12. Steering handlebar (1) according to any one of Claims 6 to 11, **characterised in that** each of the said half-shells (10, 10') is hollow at its longitudinal ends and comprises reinforcements (101) between the said ends.

13. Method of manufacturing a steering handlebar (1) according to any one of Claims 1 to 12, **characterised in that** said method comprises:
- a stage (400) for obtaining two half-shells (10, 10') which are intended to form the core (1') of the handlebar (1);
- a stage (400) for obtaining at least one stiffening insert (200, 200');
- a stage (401) for assembling the two half-shells (10, 10') so as to form the core (1') of the handlebar (1) ;
- a stage (402) for over-moulding the core (1') of the handlebar (1) so as to obtain an over-moulded core (1'); and
- a stage (403) for fixing the said at least one stiffening insert (200, 200') onto the upper part of the said over-moulded core (1').

14. Method of manufacture according to Claim 13, **characterised in that** the stages (400) for obtaining the said at least one stiffening insert (200, 200') and the two half-shells (10, 10'), and the over-moulding stage (402) are carried out by injecting a plastic material.
